Europäisches Patentamt

European Patent Office

Office européen des brevets

(19)

(11) Numéro de publication : **0 006 214**
**B1**

(12) **FASCICULE DE BREVET EUROPÉEN**

(45) Date de publication du fascicule du brevet :
03.11.82

(51) Int. Cl.³ : **H 04 Q 11/04**

(21) Numéro de dépôt : **79101902.9**

(22) Date de dépôt : **12.06.79**

(54) **Réseau de connexion temporel et moyens pour pallier les défaillances.**

(30) Priorité : **19.06.78 FR 7818221**

(43) Date de publication de la demande :
**09.01.80 (Bulletin 80/01)**

(45) Mention de la délivrance du brevet :
**03.11.82 Bulletin 82/44**

(84) Etats contractants désignés : ·
**BE CH DE FR GB IT LU NL SE**

(56) Documents cités :
**DE A 2 320 123**
**DE A 2 320 123**
**DE A 2 446 391**
**DE A 2 540 577**
**FR A 2 156 965**
**FR A 2 156 965**
**FR A 2 302 654**
**FR A 2 302 654**
**FR A 2 315 815**
**FR A 2 347 846**
**FR A 2 347 846**

**IEEE INTERNATIONAL CONFERENCE ON
COMMUNICATIONS, juin 1977 New York
YAMAGUCHI et al. : « System Design of Experimental Digital Telephone Switching System »,
pages 20.4-66 à 20.4-70.**

**IEEE INTERNATIONAL CONFERENCE ON
COMMUNICATIONS, juin 1977 New York
YAMAGUCHI et al. : « System Design of Experimental Digital Telephone Switching System »,
pages 20.4-66 à 20.4-70.**

(73) Titulaire : **COMPAGNIE INDUSTRIELLE DES TELE-
COMMUNICATIONS CIT-ALCATEL S.A. dite:**
**12, rue de la Baume**
**F-75008 Paris (FR)**

(72) Inventeur : **Le Dieu, Bernard**
**Rue de Keralsam**
**F-22700 Perros-Guirec (FR)**

(74) Mandataire : **Weinmiller, Jürgen et al**
**Zeppelinstrasse 63**
**D-8000 München 80 (DE)**

Imprimerie Jouve, 18, rue St-Denis, 75001 Paris, France

Réseau de connexion temporel et moyens pour pallier les défaillances.

L'invention concerne des réseaux de connexion temporel tels que spécifiés dans le préambule de la revendication 1.

De tels réseaux de connexion sont connus et peuvent être des types TST, TSSST, STS etc. c'est-à-dire comportant au moins un étage spatial multiplex (S) entre deux étages temporels (T), ou encore au moins un étage temporel entre deux étages de type spatial multiplex.

Dans le cas d'un réseau de connexion de type TST, TSSST, chaque étage temporel est constitué de commutateurs temporels à chacun desquels est associé un interface de commutation relié à des multiplex. Un commutateur temporel et l'interface de commutation qui lui est associé constituent un ensemble de commutation.

La défaillance d'un ensemble de commutation de l'étage d'entrée ou de l'étage de sortie entraîne la mise hors service des multiplex reliés à cet ensemble de commutation et a pour conséquence l'impossibilité d'assurer le trafic provenant, ou à destination, des abonnés desservis par lesdits multiplex.

On a proposé des solutions pour éviter un tel inconvénient.

Une solution connue par exemple du document FR-A-2 156 965, consiste à relier chaque ensemble de commutation d'entrée aux ensembles de commutation d'entrée précédent et suivant. En cas de panne, chaque ensemble de commutation d'entrée vient au secours de l'ensemble de commutation d'entrée suivant selon une permutation cyclique (si la permutation est inversée, c'est évidemment l'ensemble de commutation d'entrée précédent qui vient au secours de l'ensemble de commutation défaillant).

Dans une autre solution connue, par exemple du document FR-A-2 302 654, chaque commutateur temporel de l'étage d'entrée fait partie d'un module qui comporte également deux concentrateurs en parallèle reliés aux lignes entrantes dans le module. La sortie de l'un des concentrateurs est reliée par un multiplex au commutateur temporel, et la sortie de l'autre concentrateur est reliée par un multiplex au commutateur temporel du module suivant. En cas de panne d'un module, à l'exception du concentrateur relié au module suivant, le trafic qui était normalement écoulé par le module en panne est réparti de proche en proche sur les autres modules.

Ces solutions présentent l'inconvénient de reporter la totalité du trafic d'un ensemble de commutation défaillant ou module sur l'ensemble de commutation adjacent ; dans la première solution connue, cela nécessite de diviser en deux le commutateur spatial compris entre les ensembles de commutation d'entrée et de sortie et à doubler la mémoire de parole de chaque ensemble de commutation d'entrée et de sortie ; dans la deuxième solution cela conduit à doubler les concentrateurs de lignes, et à augmenter sensiblement le taux de concentration des lignes, donc le taux de blocage.

Une autre solution connue par exemple des documents FR-A-2 315 815 ou DE-A-2 540 577, consiste à utiliser pour un certain nombre d'ensembles de commutation un ensemble de commutation supplémentaire utilisé en secours afin d'écouler le trafic de l'ensemble de commutation défaillant. Cette solution nécessite de relier l'ensemble de commutation supplémentaire à tous les autres ensembles de commutation, ce qui entraîne un coût de câblage non négligeable et la nécessité de le surveiller car il n'est pas exclu qu'il tombe lui même en panne.

Il est également connu d'associer un ensemble de commutation de l'étage d'entrée à un ensemble de commutation de l'étage de sortie, pour constituer un module d'extrémité ; dans la dernière solution citée c'est un module d'extrémité de secours qui écoule le trafic d'un module d'extrémité défaillant ; un tel module d'extrémité de secours associé à un certain nombre de modules d'extrémité constitue un groupe, et le réseau de connexion comporte donc plusieurs de ces groupes.

L'invention a pour but un réseau de connexion dans lequel tous les modules d'extrémité sont actifs et constituent des groupes, le trafic d'un module d'extrémité défaillant étant partagé entre les autres modules d'extrémité du groupe.

Ce but est atteint par le réseau de connexion temporel tel que défini par la revendication 1.

L'invention va être décrite en regard d'exemples de réalisation illustrés par les dessins annexés dans lesquels :

la figure 1 représente schématiquement un réseau de connexion, auquel s'applique l'invention,

la figure 2 représente un groupe de modules d'extrémité du réseau selon la figure 1,

la figure 3 représente un détail de la figure 2,

la figure 4 représente un autre détail de la figure 2.

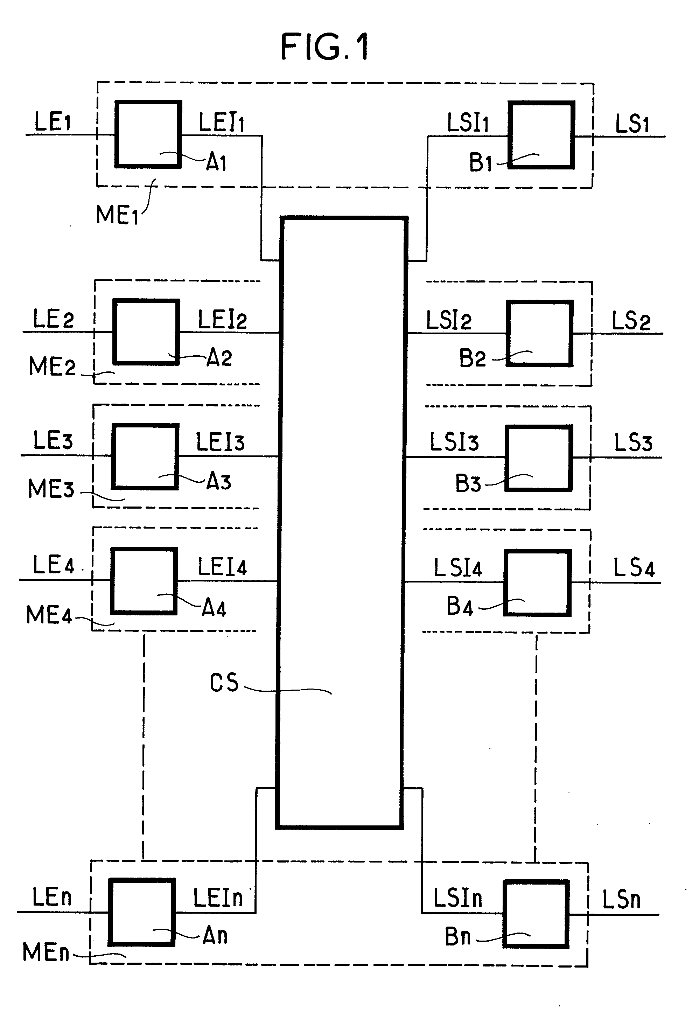

La figure 1 représente un réseau de connexion de type temporel, spatial, temporel, comportant un étage d'entrée et un étage de sortie temporels et un étage intermédiaire ou commutateur spatial CS.

L'étage d'entrée est constitué d'ensembles de commutation d'entrée $A_1$, $A_2$, ... $A_n$, reliés chacun à une ligne entrante $LE_1$, $LE_2$, ... $LE_n$, respectivement, chaque ligne entrante étant constituée de plusieurs multiplex, 16 par exemple. Chaque ensemble de commutation d'entrée comporte, de manière connue, un interface de commutation et un commutateur temporel, l'interface de commutation étant relié d'une part au commutateur temporel par un supermultiplex, et d'autre part à une ligne entrante.

L'étage de sortie est constitué d'ensembles de commutation $B_1$, $B_2$ ... $B_n$ reliés en sortie à une ligne sortante $LS_1$, $LS_2$, ... $LS_n$, respectivement, chaque ligne sortante étant constituée de 16 multiplex, comme chaque ligne entrante. Chaque ensemble de commutation de sortie comporte, de manière connue, un interface de commutation et un commutateur temporel, l'interface de commutation étant relié d'une part au commutateur temporel par un supermultiplex et d'autre part à une ligne sortante.

Le commutateur spatial CS est constitué d'un ou de plusieurs étages spatiaux ; il est relié à chaque ensemble de commutation d'entrée $A_1$, $A_2$, ... $A_n$, par une ligne entrante intermédiaire, $LEI_1$ ; $LEI_2$ ; ... $LEI_n$, respectivement ; il est également relié à chaque ensemble de commutation de sortie $B_1$, $B_2$, ... $B_n$, par une ligne sortante intermédiaire $LSI_1$, $LSI_2$, ..., $LSI_n$, respectivement. Chaque ligne entrante intermédiaire et chaque ligne sortante intermédiaire est un supermultiplex ayant 512 voies temporelles dans l'hypothèse de lignes entrantes $LE_1$, $LE_2$ ... $LE_n$, et de lignes sortantes $LS_1$, $LS_2$, ..., $LS_n$, constituées chacune de 16 multiplex à 32 voies temporelles chacun.

Chaque ensemble de commutation d'entrée $A_1$, $A_2$, ..., $A_n$ est associé à un ensemble de commutation de sortie $B_1$, $B_2$, ..., $B_n$, respectivement, de manière à constituer des modules d'extrémités, $ME_1$, $ME_2$, ... $ME_n$.

Un module d'extrémité constitue ce que l'on appelle une unité de défense qui répond aux conditions des cahiers des charges qui imposent une limite maximale de conversations perturbées en cas de panne d'un module d'extrémité.

L'invention s'applique à un groupe de modules d'extrémité ; un réseau de connexion est constitué par des groupes de modules d'extrémité de sorte que dans chaque groupe le trafic d'un module d'extrémité défaillant soit assuré par les autres modules d'extrémité dudit groupe.

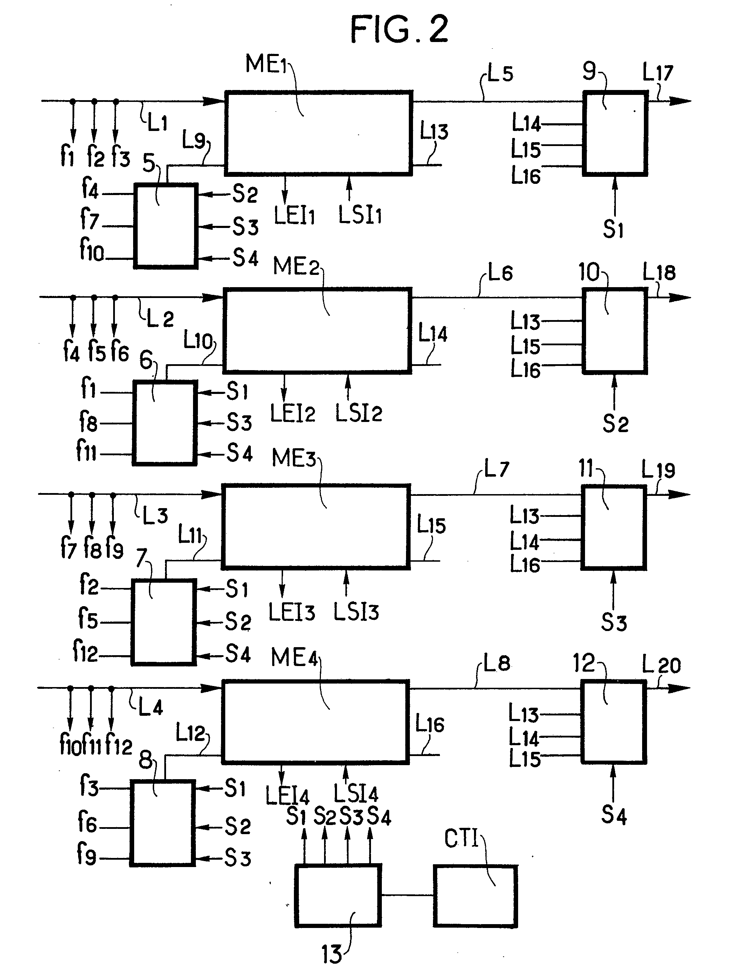

La figure 2 représente un groupe de quatre modules d'extrémité ME1, ME2, ME3, ME4, dont chacun traite par exemple douze multiplex en service normal, chaque module d'extrémité étant capable de traiter seize multiplex en service dégradé, c'est-à-dire en cas de défaillance de l'un des modules d'extrémité.

Les modules d'extrémités sont reliés respectivement à des lignes entrantes principales L1, L2, L3, L4 et à des lignes sortantes principales, L5, L6, L7, L8, les lignes entrantes principales et sortantes principales étant constituées chacune de douze multiplex ; 5, 6, 7, 8 sont des commutateurs d'entrée associés respectivement aux modules d'extrémité ; 9, 10, 11, 12 sont des commutateurs de sortie associés respectivement aux modules d'extrémité. Chaque ligne entrante principale est divisée en trois faisceaux de quatre multiplex chacun ; la ligne entrante principale L1 est divisée en trois faisceaux f1, f2, f3 ; la ligne entrante principale L2 est divisée en trois faisceaux f4, f5, f6 ; la ligne entrante principale L3 est divisée en trois faisceaux f7, f8, f9 ; la ligne entrante principale L4 est divisée en trois faisceaux f10, f11, f12.

Le commutateur d'entrée associé à un module d'extrémité est relié à un faisceau de chaque ligne entrante principale sauf à la ligne entrante principale du module d'extrémité auquel il est associé. Le commutateur d'entrée 5 est relié en entrée aux faisceaux f4, f7, f10 ; le commutateur d'entrée 6 est relié en entrée aux faisceaux f1, f8, f11 ; le commutateur d'entrée 7 est relié en entrée aux faisceaux f2, f5, f12 ; le commutateur d'entrée 8 est relié en entrée aux faisceaux f3, f6, f9. Chacun des commutateurs d'entrée 5, 6, 7, 8 est relié au module d'extrémité auquel il est associé, par une ligne entrante auxiliaire L9, L10, L11, L12 respectivement. Chaque module d'extrémité est relié au commutateur de sortie associé par une ligne sortante principale, respectivement L5, L6, L7, L8. Chaque module d'extrémité est relié à une ligne sortante auxiliaire, respectivement L13, L14, L15, L16. Chacun des commutateurs de sortie est relié aux lignes sortantes auxiliaires des modules d'extrémité, sauf à la ligne sortante auxiliaire du module d'extrémité auquel il est associé. Chacune des lignes entrantes auxiliaires et des lignes sortantes auxiliaires est constituée par un ensemble de quatre multiplex. Le commutateur de sortie 9 est relié aux lignes sortantes auxiliaires L14, L15, L16 ; le commutateur de sortie 10 est relié aux lignes sortantes auxiliaires L13, L15, L16 : le commutateur de sortie 11 est relié aux lignes sortantes auxiliaires L13, L14, L16 ; le commutateur de sortie 12 est relié aux lignes sortantes auxiliaires L13, L14, L15. Chaque commutateur de sortie 9, 10, 11, 12 est relié, en sortie à une ligne sortante, respectivement, L17, L18, L19, L20, constituée par douze multiplex. Un organe de contrôle 13 relié à un centre de traitement des informations, CTI, du central auquel appartient le réseau de connexion, comporte quatre sorties S1, S2, S3, S4, et délivre un signal hors service sur la sortie correspondant au module d'extrémité en panne, ME1, ME2, ME3, ME4, respectivement. Chaque commutateur de sortie reçoit le signal hors service correspondant au module d'extrémité auquel il est associé ; les commutateurs de sortie 9, 10, 11, 12 reçoivent donc respectivement les signaux hors service des sorties S1, S2, S3, S4. Chaque commutateur d'entrée reçoit les signaux hors service correspondant aux modules d'extrémités, sauf le signal correspondant au module d'extrémité auquel · il est associé ; le commutateur d'entrée 5 reçoit les signaux hors service des sorties S2, S3, S4 ; le commutateur d'entrée 6 reçoit les signaux hors service des sorties S1, S3, S4 ; le commutateur d'entrée 7 reçoit les signaux hors service des sorties S1, S2, S4 ; le commutateur d'entrée 8 reçoit les signaux hors service des sorties S1, S2, S3.

Chaque module d'extrémité est bien entendu relié au commutateur spatial CS, comme dans la figure 1, par une ligne entrante intermédiaire LEI1 à LEI4, respectivement, et par une ligne sortante intermédiaire LSI1 à LSI4 respectivement.

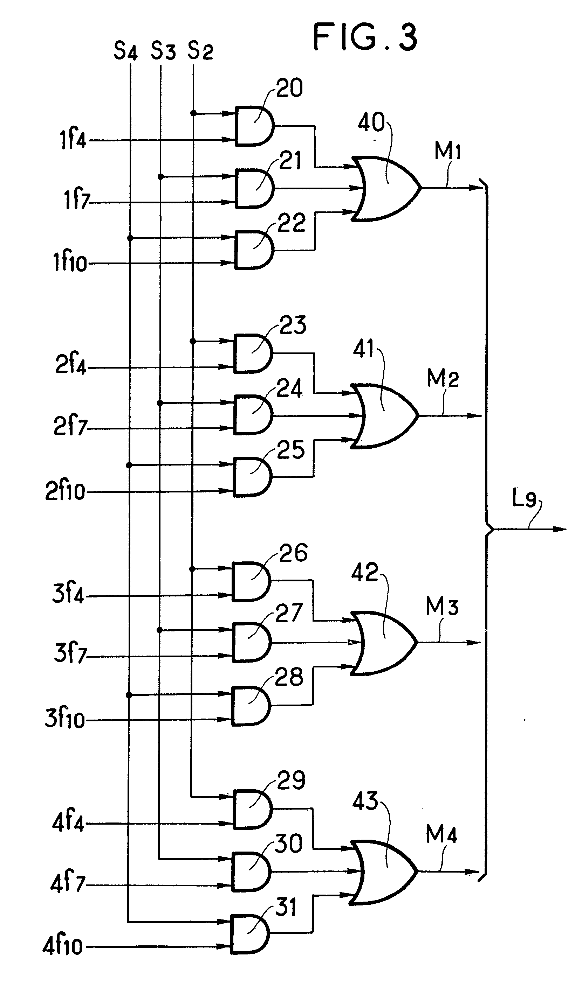

La figure 3 représente un commutateur d'entrée tel que le commutateur d'entrée 5 par exemple. Il comporte douze portes ET, 20 à 31 et quatre portes OU, 40, 41, 42, 43. Les trois portes ET 20, 21, 22 ont leurs sorties reliées à la porte OU 40 dont la sortie est reliée à un multiplex M1. Les portes ET 23, 24, 25 ont leurs sorties reliées à la porte OU 41 dont la sortie est reliée à un multiplex M2. Les portes ET 26, 27, 28 ont leurs sorties reliées à la porte OU 42 dont la sortie est reliée à un multiplex M3. Les portes ET 29, 30, 31 ont leurs sorties reliées à la porte OU 43 dont la sortie est reliée à un multiplex M4. Les quatres multiplex M1, M2, M3, M4 constituent la ligne entrante auxiliaire L9 du module d'extrémité ME1 associé au commutateur d'entrée 5.

Les portes ET 20, 23, 26, 29 ont une entrée reliée à la sortie S2 de l'organe de contrôle 13. Les portes ET 21, 24, 27, 30 ont une entrée reliée à la sortie S3 de l'organe de contrôle 13. Les portes ET 22, 25, 28, 31 ont une entrée reliée à la sortie S4 de l'organe de contrôle 13.

Il a été dit que les faisceaux f1, f2...f12 étaient constitués chacun de quatre multiplex : on désignera par 1f4, 2f4, 3f4, 4f4 chacun des multiplex du faisceau f4, par 1f7, 2f7, 3f7, 4f7 chacun des multiplex du faisceau f7, etc.

Les portes ET 20, 21, 22 ont une entrée reliée aux multiplex 1f4, 1f7, 1f10, respectivement.

Les portes ET 23, 24, 25 ont une entrée reliée aux multiplex 2f4, 2f7, 2f10 respectivement.

Les portes ET 26, 27, 28 ont une entrée reliée aux multiplex 3f4, 3f7, 3f10 respectivement.

Les portes ET 29, 30, 31 ont une entrée reliée aux multiplex 4f4, 4f7, 4f10 respectivement.

Les commutateurs d'entrée 6, 7, 8 de la figure 2 sont bien entendu identiques au commutateur d'entrée 5 représenté figure 3.

Pour les commutateurs d'entrée 6, 7, 8 les sorties S2, S3, S4 de l'organe de contrôle auxquelles sont reliées les portes ET du commutateur d'entrée 5 sont remplacées respectivement par les sorties S1, S3, S4, ou S1, S2, S4, ou S1, S2, S3, conformément à la figure 2.

De même les multiplex 1f4 à 4f4, 1f7 à 4f7, 1f10 à 4f10 sont remplacés par les multiplex correspondant des faisceaux f1, f8, f11, ou f2, f5, f12, ou f3, f6, f9. Les multiplex M1, M2, M3, M4 constituent alors les lignes entrantes auxiliaires L10, L11, L12, respectivement, conformément à la figure 2.

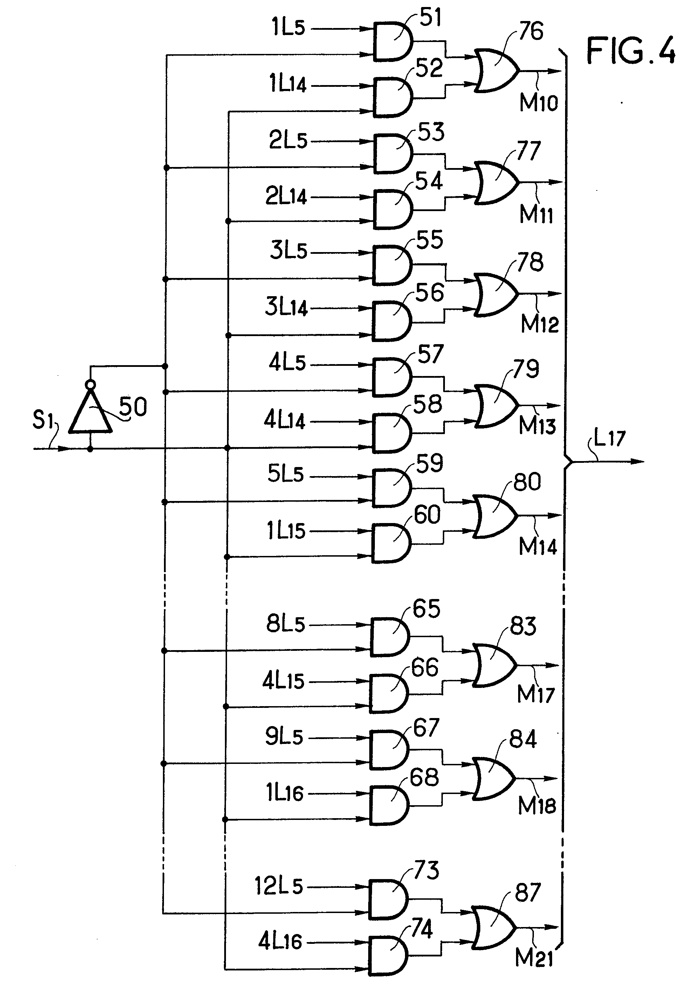

La figure 4 représente un commutateur de sortie tel que le commutateur de sortie 9 par exemple qui comporte vingt-quatre portes ET 51 à 74, a deux entrées chacune, et douze portes OU 76 à 87, à deux entrées chacune. Chaque porte OU est reliée en sortie à un multiplex, M10 à M21, respectivement ; l'ensemble de ces multiplex constitue la ligne sortante L17 de la figure 2. Chaque porte OU est reliée en entrée à deux portes ET ; la porte OU 76 est reliée aux portes ET 51, 52, la porte OU 77 est reliée aux portes ET 53, 54, la porte OU 78 est reliée aux portes ET 55, 56, la porte OU 79 est reliée aux portes ET 57, 58, la porte OU 80 est reliée aux portes ET 59, 60, la porte OU 83 est reliée aux portes ET 65, 66, la porte OU 84 est reliée aux portes ET 67, 68, et la porte OU 87 est reliée aux portes ET 73, 74.

Pour chaque porte OU, une première porte ET a une entrée reliée à un multiplex de la ligne sortante principale reliant un commutateur de sortie au module d'extrémité associé. Dans le cas de la figure 4, qui concerne le commutateur de sortie 9 la ligne sortante principale L5 est constituée de douze multiplex 1L5, 2L5, ... 12L5, et une entrée des premières portes ET 51, 53, 55, 57, 59 ... 65, 67, ... 73 est reliée respectivement à un multiplex 1L5, 2L5 ... 12L5 de la ligne sortante principale L5. Une autre entrée des premières portes ET est reliée, par un inverseur 50 à la sortie S1 de l'organe de contrôle 13. Pour chaque porte OU une deuxième porte ET a une entrée reliée à un multiplex des lignes sortantes auxiliaires reliées aux modules d'extrémités autres que celui associé au commutateur de sortie considéré. Dans le cas de la figure 4, qui concerne le commutateur de sortie 9 une entrée des deuxièmes portes ET 52, 54, 56, 58 est reliée respectivement aux multiplex 1L14, 2L14, 3L14, 4L14, de la ligne sortante auxiliaire L14 ; une entrée des deuxièmes portes ET 60 à 66 est reliée respectivement aux multiplex 1L15 à 4L15 de la ligne sortante auxiliaire L15 ; une entrée des deuxièmes portes ET 68 à 74 est reliée respectivement aux multiplex 1L16 à 4L16 de la ligne sortante auxiliaire L16. Une autre entrée des deuxièmes portes ET est reliée directement à la sortie S1 de l'organe de contrôle 13.

On voit que l'on peut aiguiller sur un multiplex relié à la sortie d'une porte OU soit un multiplex d'une ligne sortante principale reliant un module d'extrémité et son commutateur de sortie associé, soit un multiplex d'une ligne sortante auxiliaire d'un autre module d'extrémité. En l'absence de signal sur la sortie S1 de l'organe de contrôle, ce qui signifie que le module d'extrémité ME1 n'est pas en panne, les premières portes ET 51, 53, 55 ... 73 dont une entrée est reliée à un multiplex de la ligne sortante principale L5, sont activées par un signal délivré par l'inverseur 50 ; ainsi chaque multiplex 1L5, 2L5 ... 12L5 de la ligne sortante principale L5 est relié au multiplex correspondant M10, M11 ; ... M21. Si l'organe de contrôle 13 délivre un signal en sortie S1, ce qui signifie que le module d'extrémité 1 est en panne, les premières portes ET 51, 53 ... 73 sont inhibées ; par contre les deuxièmes portes ET 52, 54, ... 74 sont activées, puisque reliées directement à la sortie S1, de sorte que les multiplex 1L14 à 4L14, 1L15 à 4L15, 1L16 à 3L16 sont reliés aux multiplex M10 à M21.

On va décrire à présent le fonctionnement du dispositif de la figure 2. Lorsque tous les modules d'extrémité ME1 à ME4 sont en fonctionnement normal, les lignes entrantes principales L1, L2, L3, L4 sont reliées aux lignes sortantes principales L5, L6, L7, L8, respectivement, et les commutateurs de sortie relient les lignes sortantes principales L5, L6, L7, L8, aux lignes sortantes L17, L18, L19, L20, respectivement ; aucun signal n'apparaissant sur les sorties S1, S2, S3, S4 de l'organe de contrôle 13, il en résulte que les portes ET des commutateurs d'entrée, figure 3, sont inhibées.

Si un module d'extrémité tombe en panne, et à titre d'exemple on supposera que c'est le module d'extrémité ME1 qui est défectueux, les faisceaux f1, f2, f3 de la ligne entrante principale L1 qui sont reliés respectivement aux commutateurs d'entrée 6, 7, 8 vont être utilisés pour acheminer le trafic de la ligne entrante principale L1. Le module d'extrémité ME1 étant en panne, l'organe de contrôle 13 délivre un signal hors service sur sa sortie correspondante S1, et ce signal active dans chaque commutateur d'entrée 6, 7, 8 les portes ET des multiplex des faisceaux f1, f2, f3, ce qui relie ces multiplex aux lignes entrantes auxiliaires L10, L11, L12. Les modules d'extrémités ME2, ME3, ME4 relient les lignes entrantes auxiliaires L10, L11, L12 aux lignes sortantes auxiliaires L14, L15, L16 respectivement.

Les lignes sortantes auxiliaires L14, L15, L16 sont reliées au commutateur de sortie 9, figure 4, qui reçoit le signal délivré par l'organe de contrôle 13 sur sa sotie S1 ; les multiplex des lignes sortantes auxiliaires L14, L15, L16 sont donc reliés aux multiplex M10 à M21 du commutateur de sortie 9, qui constituent la ligne sortante L17.

On voit que de cette manière la ligne entrante principale L1 est reliée à la ligne sortante L17, bien que le module d'extrémité ME1 soit en panne, ce qui permet l'écoulement du trafic de la ligne entrante principale L1.

Les commutateurs de sortie 10, 11, 12 sont identiques au commutateur 9 représenté figure 4, dans laquelle il suffit de remplacer : les multiplex de la ligne sortante principale L5 par les multiplex de la ligne sortante principale reliant le module d'extrémité associé au commutateur de sortie considéré, les multiplex des lignes sortantes auxiliaires par ceux des lignes sortantes auxiliaires auxquelles le commutateur de sortie considéré est relié, et la liaison avec la sortie S1 de l'organe de contrôle 13 par une liaison avec la sortie correspondante dudit organe de contrôle. Les multiplex M10 à M21 constituent la ligne sortante L17 dans le cas du commutateur de sortie 9 ; ces multiplex constituent la ligne sortante associée au commutateur de sortie considéré, c'est-à-dire L18, L19, L20, respectivement pour les commutateurs de sortie 10, 11, 12.

Le dispositif représenté figure 2 permet donc, lorsque l'un de ces modules d'extrémité du groupe tombe en panne, d'écouler par l'intermédiaire des autres modules d'extrémités du groupe le trafic de la ligne entrante principale reliée au module d'extrémité en panne.

Ainsi qu'il a été dit chaque module d'extrémité assure, en fonctionnement normal, le trafic d'une ligne entrante principale constituée de douze multiplex, soit quarante huit multiplex pour un groupe de quatre modules d'extrémité, ce qui donne dans ce cas un taux de blocage, pour chaque module d'extrémité, inférieur à $10^{-13}$ pour un trafic de 0,85 erlang. Dans la solution classique, qui consiste à avoir trois modules d'extrémité traitant chacun le trafic de seize multiplex en fonctionnement normal, et un module d'extrémité supplémentaire en secours, le taux de blocage par module d'extrémité est de l'ordre de $10^{-5}$ pour un trafic de 0,85 erlang. On voit donc que l'invention permet de diminuer très fortement le blocage, ce qui permet un meilleur écoulement du trafic ; de plus les modules d'extrémité et leur câblage sont rigoureusement identiques, ce qui n'est pas le cas, dans la solution classique, du module d'extrémité supplémentaire.

Dans l'exemple décrit ci-dessus, les lignes entrantes principales L1, L2, L3, L4 à 12 multiplex chacune, remplacent les lignes entrantes LE1, LE2, LE3, LE4 à 16 multiplex chacune, de la figure 1, et les modules d'extrémité ne sont pas reliés directement aux lignes sortantes L17, L18, L19, L20 à 12 multiplex chacune qui remplacent les lignes sortantes LS1, LS2, LS3, LS4, à 16 multiplex chacunes, de la figure 1.

On a supposé, dans l'exemple décrit que chaque module d'extrémité pouvait traiter 16 multiplex, mais qu'il ne traitait, en service normal c'est-à-dire lorsqu'aucun module d'extrémité du groupe n'était en panne, que 12 multiplex, ce qui conduit à un groupe de quatre modules d'extrémité.

Il est possible d'avoir des groupes comportant un nombre différent de modules d'extrémité et des modules d'extrémité pouvant traiter un nombre de multiplex différent de 16. En supposant que chaque module d'extrémité est capable de traiter n multiplex mais qu'il ne traite que m multiplex en service normal, chaque module d'extrémité peut traiter n-m multiplex d'un module d'extrémité en panne ; il faut donc que le groupe comporte $K = k + 1$ modules d'extrémité, avec $k = m/n - m$ si le rapport $m/(n - m)$ est un nombre entier ou en prenant pour k le nombre entier immédiatement supérieur si ce rapport n'est pas lui-même un nombre entier.

Les m multiplex d'une ligne entrante principale sont donc divisés en k faisceaux. Un groupe comporte donc un nombre de modules d'extrémité tel que le produit du nombre $k + 1$ de modules d'extrémité par la différence $(n - m)$ entre le nombre n de multiplex que peut traiter un module d'extrémité et le nombre m de multiplex d'une ligne entrante principale, soit au moins égal au nombre n de multiplex que peut traiter un module d'extrémité, ce qui s'exprime par la relation :

$$(k + 1) \cdot (n - m) \geqslant n$$

On peut encore exprimer le nombre K de modules d'extrémité d'un groupe de la manière suivante : ce nombre est égal au rapport du nombre n de multiplex que peut traiter un module d'extrémité par la différence $n - m$ entre le nombre n de multiplex que peut traiter un module d'extrémité et le nombre m de multiplex d'une ligne entrante principale, si ce rapport est un nombre entier, et égal au nombre entier immédiatement supérieur si ce rapport n'est pas un nombre entier ; $K = n/n - m$

Si l'on a par exemple $n = 16$, $m = 11$, le rapport n/(n − m) est égal à 3,2 ; on adoptera alors pour K la valeur 4. Le groupe comporte quatre modules, chaque ligne entrante est divisée en trois faisceaux, puisque k = m/(n − m) étant compris entre 2 et 3 on doit adopter la valeur supérieure, c'est-à-dire 3. On peut donc avoir deux faisceaux de 5 multiplex et 1 faisceau de 1 multiplex, ou deux faisceaux de 4 multiplex et 1 faisceau de 3 multiplex, le total étant égal aux 11 multiplex d'une ligne entrante principale.

Si l'on adopte la solution de deux faisceaux à 5 multiplex, il y aura deux modules d'extrémité qui traiteront 16 multiplex et un module qui traitera 12 multiplex, en cas de panne d'un module d'extrémité.

Si l'on adopte la solution de deux faisceaux à 4 multiplex, il y aura deux modules d'extrémité qui traiteront 15 multiplex et un module d'extrémité qui traitera 14 multiplex, en cas de panne d'un module d'extrémité.

Le meilleur cas est celui pour lequel tous les modules d'extrémité traitent n multiplex en cas de panne d'un module d'extrémité : pour cela il faut que le rapport k = m/(n − m) soit un nombre entier. Ainsi dans l'exemple décrit en regard des figures 2, 3 et 4, on a n = 16, m = 12 et k = 12/4 = 3 d'où K = k + 1 = 4 ; en cas de panne d'un module d'extrémité les autres modules d'extrémité du groupe sont utilisés à leur capacité maximum, puisqu'ils traitent chacun 16 multiplex.

## Revendications

1. Réseau de connexion temporel et moyens pour pallier les défaillances, comportant un étage d'entrée et un étage de sortie de type temporel ou spatial multiplex, l'étage d'entrée étant relié à des lignes entrantes principales (L1, L2, L3, L4) l'étage de sortie étant relié à des lignes sortantes principales (L5, L6, L7, L8), lesdites lignes entrantes et sortantes principales comportant chacune un même nombre de multiplex, l'étage d'entrée et l'étage de sortie comportant un même nombre d'ensembles de commutation (A1 ... An, B1 ... Bn), un ensemble de commutation de l'étage d'entrée et un ensemble de commutation de l'étage de sortie constituant un module d'extrémité (ME1 ... MEn) relié à une ligne entrante principale et à une ligne sortante principale, chaque module d'extrémité étant capable de traiter un nombre n de multiplex au moins égal à celui d'une ligne entrante principale, caractérisé par le fait que les lignes entrantes principales et sortantes principales comportent chacune un nombre m de multiplex inférieur au nombre n de multiplex que peut traiter un module d'extrémité (ME1 ... MEn), que l'on constitue des groupes avec les modules d'extrémité, chaque groupe comportant un nombre de modules d'extrémités égal au rapport du nombre n de multiplex que peut traiter un module d'extrémité par la différence (n − m) entre le nombre de multiplex que peut traiter un module d'extrémité et le nombre de multiplex d'une ligne entrante principale si ce rapport est un nombre entier, et égal au nombre entier immédiatement supérieur si ce rapport n'est pas un nombre entier, que l'on divise chaque ligne entrante principale (L1) en autant de faisceaux (f1, f2, f3) qu'il y a de modules d'extrémité moins un, que l'on répartit les faisceaux d'une ligne entrante principale d'un module d'extrémité entre tous les autres modules d'extrémité du groupe, chaque faisceau ayant un nombre de multiplex au plus égal à la différence entre le nombre de multiplex que peut traiter un module et le nombre de multiplex d'une ligne entrante principale, que chaque module d'extrémité est associé d'une part à un commutateur d'entrée (5, 6, 7, 8) auquel il est relié par une ligne entrante auxiliaire (L9, L10, L11, L12) et d'autre part à un commutateur de sortie (9, 10, 11, 12) auquel il est relié par une ligne sortante principale (L5, L6, L7, L8), que chaque commutateur d'entrée est relié à un faisceau de chacune des lignes entrantes principales du groupe excepté la ligne entrante principale du module d'extrémité auquel il est associé, que chaque module d'extrémité est relié par une ligne sortante auxiliaire (L13, L14, L15, L16) à tous les commutateurs de sortie du groupe, excepté celui auquel il est associé, que chaque commutateur de sortie est relié à une ligne sortante (L17, L18, L19, L20) ayant le même nombre de multiplex qu'une ligne entrante principale et que lesdites lignes entrantes auxiliaires et sortantes auxiliaires sont consitituées par un même nombre de multiplex qui est au plus égal à la différence entre le nombre (n) de multiplex que peut traiter un module d'extrémité et le nombre (m) de multiplex d'une ligne entrante principale.

2. Réseau de connexion temporel selon la revendication 1, caractérisé par le fait que chaque commutateur d'entrée (5, 6, 7, 8) reçoit, d'un organe de contrôle (13) dudit réseau de connexion, un signal hors service (S1, S2, S3, S4) lorsqu'un module d'extrémité autre que celui auquel il est associé est défaillant, ledit signal hors service permettant de relier le faisceau issu de la ligne entrante principale (L1 à L4) du module d'extrémité défaillant à la ligne entrante auxiliaire (L9 à L12) reliant ledit commutateur d'entrée au module d'extrémité associé.

3. Réseau de connexion temporel selon la revendication 1, caractérisé par le fait que chaque commutateur de sortie reçoit, d'un organe de contrôle (13) dudit réseau de connexion, un signal hors service (S1, S2, S3, S4) lorsque le module d'extrémité auquel il est associé est défaillant, de manière à supprimer toute connexion entre ledit module d'extrémité et ledit commutateur de sortie associé, et à établir une connexion entre la ligne sortante (L17 à L20) reliée audit commutateur de sortie et les lignes sortantes auxiliaires des modules d'extrémités non défaillants.

4. Réseau de connexion temporel selon la revendication 2, caractérisé par le fait que chaque commutateur d'entrée comporte autant de portes OU (41, 42, 43, 44) qu'il y a de multiplex (M1, M2, M3, M4) constituant une ligne entrante auxiliaire (L9), chaque porte OU étant reliée en entrée à autant de portes ET (20 à 31) qu'il y a de modules d'extrémités moins un, chaque porte ET ayant une entrée reliée à un multiplex d'un faisceau (1f4) d'une ligne entrante principale (L1) différente et une autre entrée reliée à une sortie (S2) de l'organe de contrôle (13) correspondant au module d'extrémité relié à la ligne entrante principale dudit faisceau.

5. Réseau de connexion temporel selon la revendication 3, caractérisé par le fait que chaque commutateur de sortie comporte autant de portes OU (76 à 87) qu'il y a de multiplex (M10 à M21) dans la ligne sortante (L17), chaque porte OU étant reliée en entrée à deux portes ET (51, 52), une première porte ET (51) ayant une entrée reliée à un multiplex (1L5) de la ligne sortante principale (L5) reliant un commutateur de sortie au module d'extrémité associé, et une autre entrée reliée par un inverseur (50) à une sortie (S1) de l'organe de contrôle correspondant au module d'extrémité associé au commutateur de sortie, une deuxième porte ET (52) ayant une entrée reliée à un multiplex (1L14) d'une ligne sortante auxiliaire (L14) des modules d'extrémité exceptée la ligne sortante auxiliaire reliée au module d'extrémité associé au commutateur de sortie, et une autre entrée reliée à ladite sortie (S1) de l'organe de contrôle.

## Claims

1. Time-division switching network and means for mitigating fault conditions therein, comprising a time-division or space-division incoming stage and outgoing stage, the incoming stage being linked to main incoming lines (L1, L2, L3, L4) and the outgoing stage being linked to main outgoing lines (L5, L6, L7, L8), said main incoming lines and main outgoing lines each comprising the same number of multiplex lines, the incoming stage and outgoing stage each comprising the same number of switching units (A1 ... An, B1 ... Bn), a switching unit of the incoming stage and a switching unit of the outgoing stage forming a terminal module (ME1 ... MEn) linked to a main incoming line and a main outgoing line, each terminal module being capable of handling a number n of multiplex lines at least equal to that in a main incoming line, characterized in that the main incoming and main outgoing lines each comprise a number m of multiplex lines less than the number n of multiplex lines which a terminal module (ME1 ... MEn) can handle, in that the terminal modules are formed into groups, each group comprising a number of terminal modules equal to the ratio of the number n of multiplex lines which a terminal module can handle and the difference n-m between the number of multiplex lines which a terminal module can handle and the number of multiplex lines in a main incoming line, if this ratio is an integer, and equal to the next higher integer, if this ratio is not itself an integer, in that each main incoming line (L1) is divided into as many bundles (f1, f2, f3) of multiplex lines as there are terminal modules minus one, in that the bundles of a main incoming line of a terminal module are distributed amongst all the other terminal modules of the group, each bundle containing a number of multiplex lines at most equal to the difference between the number of multiplex lines which a module can handle and the number of multiplex lines of a main incoming line, in that each terminal module is associated with an input switch (5, 6, 7, 8) to which it is linked via an auxiliary incoming line (L9, L10, L11, L12) and also with an output switch (9, 10, 11, 12) to which it is linked via a main outgoing line (L5, L6, L7, L8), in that each input switch is linked to one bundle of each of the main incoming lines of the group except the main incoming line of the terminal module with which it is associated, in that each terminal module is linked via an auxiliary outgoing line (L13, L14, L15, L16) to all the output switches of the group, except that with which it is associated, in that each output switch is linked to an outgoing line (L17, L18, L19, L20) containing the same number of multiplex lines as a main incoming line, and in that said auxiliary incoming lines and auxiliary outgoing lines consist of the same number of multiplex lines which is at most equal to the difference between the number (n) of multiplex lines which a terminal module can handle and the number (m) of multiplex lines of a main incoming line.

2. Time-division switching network in accordance with claim 1, characterized in that each input switch (5, 6, 7, 8) receives a « not in service » signal (S1, S2, S3, S4) from a control member (13) of said switching network when a terminal module other than that with which it is associated is faulty, said « not in service » signal enabling the bundle from the main incoming line (L1 to L4) of the faulty terminal module to be linked to the auxiliary incoming line (L9 to L12) linking said input switch to the associated terminal module.

3. Time-division switching network in accordance with claim 1, characterized in that each output switch receives a « not in service » signal (S1, S2, S3, S4) from a control member (13) of said switching network when the terminal module with which it is associated is faulty, such as to inhibit any connection between said terminal module and said associated output switch, and to establish a connection between the outgoing line (L17 to L20) linked to said output switch and the auxiliary outgoing lines of the terminal modules which are not faulty. .

4. Time division switching network in accordance with claim 2, characterized in that each input switch comprises as many OR gates (41, 42, 43, 44) as there are multiplex lines (M1, M2, M3, M4) forming an auxiliary incoming line (L9), each OR gate being linked at its input to as many AND gates (20 to 31) as there are terminal modules minus one, each AND gate having one input linked to one multiplex line of a bundle (1f4) of a different main incoming line (L1) and another input linked to an output (S2) of the control member (13) corresponding to the terminal module linked to the main incoming line of said bundle.

5. Time-division switching network in accordance with claim 3, characterized in that each output switch comprises as many OR gates (76 to 87) as there are multiplex lines (M10 to M21) in the outgoing line (L17), each OR gate being linked at its input to two AND gates (51, 52) a first AND gate (51) having one input linked to one multiplex line (1L5) of the main outgoing line (L5) linking an output switch to the associated terminal module, and another input linked via an inverter (50) to an output (S1) of the control member corresponding to the terminal module associated with the output switch, a second AND gate (52) having one input linked to one multiplex line (1L14) of an auxiliary outgoing line (L14) of the terminal modules other than the auxiliary outgoing line linked to the terminal module associated with the output switch, and another input linked to said output (S1) of the control member.

**Ansprüche**

1. Zeitmultiplexkoppelfeld und Mittel zur Bekämpfung von Fehlern, mit einer Eingangs- und einer Ausgangsstufe vom Zeit- oder Raummultiplextyp, wobei die Eingangsstufe mit Haupteingangsleitungen (L1, L2, L3, L4) und die Ausgangsstufe mit Hauptausgangsleitungen (L5, L6, L7, L8) verbunden ist, wobei die Haupteingangs- und Hauptausgangsleitungen je die gleiche Anzahl von Multiplexleitungen aufweisen, wobei die Eingangs- und Ausgangsstufe die gleiche Anzahl von Umschalteinrichtungen (A1 ... An, B1 ... Bn) aufweisen, wobei eine Umschalteinrichtung der Eingangsstufe und eine Umschalteinrichtung der Ausgangsstufe zusammen einen Endmodul (ME1 ... MEn) bilden, der mit einer Haupteingangsleitung und einer Hauptausgangsleitung verbunden ist, und jeder Endmodul eine Anzahl n von Multiplexleitungen bearbeiten kann, die mindestens gleich der Anzahl von Multiplexleitungen einer Haupteingangsleitung ist, dadurch gekennzeichnet, daß die Haupteingangs- und Hauptausgangsleitungen je eine Zahl m von Multiplexleitungen aufweisen, die niedriger ist als die Anzahl n von Multiplexleitungen, die ein Endmodul (ME1 ... MEn) bearbeiten kann, daß aus den Endmoduln Gruppen gebildet werden, von denen jede eine Anzahl von Endmoduln gleich dem Verhältnis der Anzahl n von Multiplexleitungen aufweist, die ein Endmodul bearbeiten kann, durch die Differenz (n − m) zwischen der Anzahl von Multiplexleitungen, die ein Endmodul bearbeiten kann und der Anzahl von Multiplexleitungen einer Haupteingangsleitung, wenn dieses Verhältnis eine ganze Zahl ist, bzw. der nächsthöheren ganzen Zahl, wenn dieses Verhältnis keine ganze Zahl ist, daß man jede Haupteingangsleitung (L1) in soviele Bündel (f1, f2, f3) aufteilt, wie es Endmoduln minus eins gibt, daß man die Bündel einer Haupteingangsleitung eines Endmoduls auf alle anderen Endmoduln der Gruppe aufteilt, wobei jedes Bündel höchstens soviele Multiplexleitungen besitzt, wie die Differenz zwischen der Anzahl von Multiplexleitungen, die ein Modul bearbeiten kann, und der Anzahl von Multiplexleitungen einer Haupteingangsleitung beträgt, daß jeder Endmodul einerseits einem Eingangsschalter (5, 6, 7, 8) zugeordnet ist, mit dem er über eine Hilfseingangsleitung (L9, L10, L11, L12) verbunden ist, und andererseits einem Ausgangsschalter (9, 10, 11, 12) zugeordnet ist, mit dem er über eine Hauptausgangsleitung (L5, L6, L7, L8) verbunden ist, daß jeder Eingangsschalter mit einem Bündel jeder der Haupteingangsleitungen der Gruppe verbunden ist mit Ausnahme der Haupteingangsleitung des Endmoduls, dem er zugeordnet ist, daß jeder Endmodul über eine Hilfsausgangsleitung (L13, L14, L15, L16) mit allen Ausgangsschaltern der Gruppe verbunden ist mit Ausnahme dessen, dem er zugeordnet ist, daß jeder Ausgangsschalter mit einer Ausgangsleitung (L17, L18, L19, L20) verbunden ist, die die gleiche Anzahl von Multiplexleitungen wie eine Haupteingangsleitung aufweist, und daß die Hilfseingangs- und Hilfsausgangsleitungen aus einer gleichen Anzahl von Multiplexleitungen bestehen, die höchstens gleich der Differenz zwischen der Anzahl (n) von Multiplexleitungen, die ein Endmodul bearbeiten kann, und der Anzahl (m) von Multiplexleitungen einer Haupteingangsleitung ist.

2. Zeitmultiplexkoppelfeld nach Anspruch 1, dadurch gekennzeichnet, daß jeder Eingangsschalter (5, 6, 7, 8) von einem Steuerorgan (13) des Koppelfelds ein Außer-Dienst-Signal (S1, S2, S3, S4) zugeführt erhält, wenn ein anderer Endmodul als der, dem er zugeordnet ist, fehlerhaft ist, wobei das Außer-Dienst-Signal es ermöglicht, das von der Haupteingangsleitung (L1 bis L4) kommende Bündel des fehlerhaften Endmoduls mit der Hilfseingangsleitung (L9 bis L12) zu verbinden, die den Eingangsschalter mit dem zugeordneten Endmodul verbindet.

3. Zeitmultiplexkoppelfeld nach Anspruch 1, dadurch gekennzeichnet, daß jeder Ausgangsschalter von einem Steuerorgan (13) des Koppelfelds ein Außer-Dienst-Signal (S1, S2, S3, S4) empfängt, wenn der ihm zugeordnete Endmodul fehlerhaft ist, um so jede Verbindung zwischen dem Endmodul und dem zugeordneten Ausgangsschalter zu unterdrücken und eine Verbindung zwischen der Ausgangsleitung (L17 bis L20), die mit dem Ausgangsschalter verbunden ist, und den Hilfsausgangsleitungen der nicht fehlerhaften Endmoduln herzustellen.

4. Zeitmultiplexkoppelfeld nach Anspruch 2, dadurch gekennzeichnet, daß jeder Eingangsschalter soviele ODER-Glieder (41, 42, 43, 44) aufweist, wie es Multiplexleitungen (M1, M2, M3, M4) gibt, die eine Hilfseingangsleitung (L9) bilden, wobei jedes ODER-Glied eingangsseitig mit sovielen UND-Gliedern (20 bis 31) verbunden ist, wie es Endmoduln minus eins gibt, wobei jedes UND-Glied über einen Eingang mit einer Multiplexleitung eines Bündels (1f4) einer anderen Haupteingangsleitung (L1) und über einen anderen Eingang mit einem Ausgang (S2) des Steuerorgangs (13) verbunden ist, das dem mit der Haupteingangsleitung dieses Bündels verbundenen Endmodul entspricht.

5. Zeitmultiplexkoppelfeld nach Anspruch 3, dadurch gekennzeichnet, daß jeder Ausgangsschalter soviele ODER-Glieder (76 bis 87) aufweist, wie es Multiplexleitungen (M10 bis M21) in der Ausgangsleitung (L17) gibt, wobei jedes ODER-Glied eingangsseitig mit zwei UND-Gliedern (51, 52) verbunden ist, von denen das erste UND-Glied (51) auf einem Eingang an eine Multiplexleitung (1L5) der Hauptausgangsleitung (L5) ange-schlossen ist, die einen Ausgangsschalter mit dem zugeordneten Endmodul verbindet, und mit einem anderen Eingang über einen Inverter (50) an einen Ausgang (S1) des Steuerorgans angeschlossen ist, das dem Ausgangsschalter zugeordneten Endmodul entspricht, während das zweite UND-Glied (52) mit einem Eingang an eine Multiplexleitung (1L14) einer Hilfsausgangslei-tung (L14) der Endmoduln angeschlossen ist mit Ausnahme der Hilfsausgangsleitung, die an den dem Ausgangsschalter zugeordneten Endmodul angeschlossen ist, und mit einem anderen Eingang an den Ausgang (S1) des Steuerorgans angeschlossen ist.

# FIG.1

# FIG.2

# FIG. 3

FIG.4